Europäisches Patentamt

European Patent Office

Office européen des brevets

(19)

(11) Veröffentlichungsnummer: **0 064 242**
**A1**

(12) **EUROPÄISCHE PATENTANMELDUNG**

(21) Anmeldenummer: **82103456.8**

(22) Anmeldetag: **23.04.82**

(51) Int. Cl.³: **B 65 D 88/28**
**B 65 G 69/10**

(30) Priorität: **30.04.81 DE 3117313**

(43) Veröffentlichungstag der Anmeldung:
**10.11.82 Patentblatt 82/45**

(84) Benannte Vertragsstaaten:
**CH DE FR GB IT LI**

(71) Anmelder: **Gebrüder Bühler AG**

**CH-9240 Uzwil(CH)**

(72) Erfinder: **Gmür, Bruno**
**Boppartstrasse 32**
**CH-9000 Sankt Gallen(CH)**

(74) Vertreter: **Geyer, Werner, Dr.-Ing. et al,**
**Patentanwälte GEYER, HAGEMANN & PARTNER**
**Postfach 860329**
**D-8000 München 86(DE)**

(54) **Auslauftrichter sowie Verfahren zur entmischungsfreien Austragung von Lagerprodukten.**

(57) Die Erfindung betrifft einen Auslauftrichter, der in Silozellen (1) und Lagerbehälter einen Massenfluß sicherstellen soll. Das Produkt darf dabei weder zusätzlich gemischt noch entmischt werden, sondern soll als einheitliche Masse sich absenken und ausfliessen. Die Erfindung schlägt zu diesem Zweck zwei koaxial ineinandergesteckte Trichter (5, 6) vor, die einen innern kreisförmigen (A) und einen äußeren kreisringförmigen (B) Produktstrom schaffen. Beide Produktströme werden durch im wesentlichen stetige Verengung während dem Austragen beschleunigt und in einem Ausgleichsstutzen (7), in den die beiden Ströme ohne wesentliche Richtungsänderung eintreten, auf die gleiche Geschwindigkeit angeglichen. Wegen der vielfältigen Einflußfaktoren in der Praxis hat sich eine Ausgleichszone (F) als besonders wesentliche erwiesen. Die Erfindung erlaubt eine neue Verfahrensweise sowie die Verwendung des Auslauftrichters in einer Typenreihe von Standardkonstruktionen, welche für verschiedenkörnige Güter, besonders auch an Abstehkästen für frischbenetzten Weizen, eingesetzt werden können; dabei können die Strömungsgeschwindigkeiten sichtbar gemacht werden. Für den praktischen Betrieb hat sich das Segment, bzw. das Kontrollsegment (32) als besonders wertvoll herausgestellt.

Fig. 1

EP 0 064 242 A1

Auslauftrichter sowie Verfahren zur entmischungsfreien Austragung von Lagerprodukten

Technisches Gebiet

Die Erfindung bezieht sich auf einen Auslauftrichter für Silozellen mit zwei ineinander gesetzten Trichtern zur entmischungsfreien Austragung von Weizen und anderen Nahrungs- oder Futtermitteln, sowie ein Verfahren zur entmischungsfreien Austragung von Lagerprodukten aus Silozellen.

Zugrundeliegender Stand der Technik

Der Prototyp, von dem die Erfindung ausgeht, ist in der CH-A-244 224 von der Anmelderin beschrieben. Das generelle Problem liegt darin, daß schütt- und rieselfähige Güter, wie Weizen oder andere Nahrungs- oder Futtermittel, beim Austrag aus großen Silozellen eine starke Tendenz zur einseitigen Austragung haben. Man stellt eine bevorzugte Bewegung senkrecht über den jeweiligen Auslauföffnungen fest, die bekanntlich sehr viel kleiner sind als der Gesamtquerschnitt der Silozelle. Besonders nachteilig ist dies bei Nahrungsmitteln, wenn sie über Monate lagern und davon periodisch eine Teilmenge abgezogen wird. Das Produkt verweilt so ungleich lange in der Silozelle, was in einzelnen Zonen zum Verderbnis führen kann. Dem Silofachmann ist weiterhin die Tendenz zur Entmischung bekannt. Das Lagerprodukt weist in den Randzonen eine andere Körnerzusammensetzung auf als beispielsweise in der Mitte der sogenannten Kernzone, welche bei Kernzonenfluß bevorzugt ausgetragen wird.

Die Erfindung betrifft die Gattung der Silozellen, die mit dem englischen Begriff "first in first out" bezeichnet wird. Bei dieser Gattung darf weder eine Entmischung, noch eine zusätzliche Mischung des Produktes wie sie bei Mischbunkern verlangt wird, stattfinden.

Die Lösung gemäss der CH-A-244 224 hat sich für die Entleerung von Getreidesilozellen gut bewährt. Es ist jedenfalls keine andere Lösung bekannt, die die beschriebene Problemstellung etwa wirtschaftlicher oder gesamthaft besser löst.

In der Praxis wird gemäss der CH-A-244 224 die Zellengrundfläche in Kleinstabschnitte von z.B. 40x40 cm oder 60x60 cm aufgeteilt. Jeder Abschnitt wird als Trichter ausgebildet. Die Trichter werden durch entsprechende Schiftungen auf dem Zellenboden geformt, meistens auf Platz mit Magerbeton. Von jedem der sechs dargestellten Abschnitte führt je ein Verbindungskanal zu einem Sammelauslauf. Wichtig ist bei dieser Konstruktion, dass alle Verbindungskanäle identisch gebaut und verlegt sind.

Funktionell sind zu der Lösung keine Nachteile bekannt. Bezüglich dem heute geltenden Wirtschaftlichkeitsdenken wird sie aber doch als aufwendig bezeichnet, sowohl von der baulichen Seite, als auch für die Herstellung und Montage aller Blechteile, z.B. der Ablaufrohre.

Es sind in jüngerer Zeit eine Anzahl Vorschläge gemacht worden, die aber im Bereich der Nahrungsmittelbranche nicht Fuss fassen konnten.

Die Lösung gemäß dem deutschen Gebrauchsmuster 1 944 281, bei der in den Auslaufkonus ein gegenläufiger zweiter Konus hineingesetzt wird, ist aus Hygienegründen abzulehnen, da im großen "toten" Raum unter dem gegenläufigen Konus das Produkt bzw. Produktstaub sich festsetzen und verderben würde. Wegen der heute geltenden Vorschriften über den Bakteriengehalt, die Salmonellenverseuchung usw. wäre eine solche Konstruktion nicht mehr verantwortbar.

Eine ähnliche, verhältnismäßig einfache Bauart für einen entmischungsfreien Auslauf ist in der DDR-Patentschrift 142 437 veröffentlicht. Dabei werden mehrere jeweils kleinere einfache Trichter ineinander gesetzt, wobei der Zulauf von oben frei ist, ebenso der untere Ablauf für die entsprechenden Austrittströme. Wenn auch die dort in der Figur dargestellte Entleerungsvorrichtung selbstreinigend wirkt, also das letztgenannte Problem der "toten" Ecken hier beseitigt werden konnte, so konnte doch diese Lösung das anstehende Problem für Auslauftrichter z.B. für Weizen nicht lösen. Der Einbau von derart großen Trichterkörpern ist bei Nahrungsmittelsilos kaum mehr realisierbar, da der Hauptkörper bei Siloanlagen mehrheitlich aus Beton gebaut ist und keine entsprechend großen Montageöffnungen vorgesehen werden. Ein Anbau von unten würde allein wegen des Gewichtes von Trichtern mit 4-6 m Durchmesser zu tonnenschweren Objekten führen, die noch dazu in 20 oder 50 Stück, je nach Anzahl der Silozellen, eingebaut werden müßten.

Offenbarung der Erfindung

Eine der Hauptaufgaben der Erfindung ist darin zu sehen, eine Bauform zu finden, die einfach im Aufbau, leicht von Gewicht und ohne wesentliche Änderung als Auslauftrichter für möglichst viele Auslaufprobleme, gleichsam als Standard-Einheit, verwendbar ist. Ein Anbau von unten soll besonders für Hochsilos möglich sein.

Die Erfindung ist dadurch gekennzeichnet, daß der äußere Trichter sowie der innere Trichter zwei im wesentlichen sich stetig verengende Ablaufquerschnitte bilden, die in einen gemeinsamen Ausgleichsstutzen geführt sind.

Ein erster, nach der neuen Erfindung ausgerüsteter Auslauftrichter gab bereits Resultate, die über dem bisher erreichten lagen, dies obwohl baulich der Auslauftrichter äußerst einfach ist. Mit der Erfindung ist es damit auch gelungen gleichzeitig sowohl die Funktion wie auch die Wirtschaftlichkeit, soweit es die Anlageinvestition betrifft, überraschend zu verbessern. Ein entscheidender Punkt liegt darin, daß gemäß der neuen Lehre ein stetig verengender Auslaufquerschnitt gebildet wird, was entsprechend eine gleichmäßige Beschleunigung für den Produktfluß selbst ergibt, solange er im Bereich der zwei Trichter stattfindet. Die beiden Produktströme werden dann in einem Ausgleichsstutzen zusammengeführt und gleichen sich dabei in ihrer Geschwindigkeit an.

Normalerweise wird eine weitere Reduktion des Auslaßquerschnittes benötigt. Sie ist im unteren Bereich des Ausgleichsstutzens vorgesehen.

Die Funktion des Ausgleichsstutzens kann auf verschiedene Arten erfolgen. In jedem Fall muss jedoch gewährleistet sein, daß im Ausgleichsstutzen eine Rückstauwirkung auf das Produkt ausgeübt wird, was durch die erwähnte Querschnittsreduktion sehr wirkungsvoll unterstützt wird.

Die Erfindung ist vorwiegend auf Weizen und ähnliche Produkte gerichtet, Produkte, die, einmal in Bewegung versetzt, ihre Rieselfähigkeit auch durch engere Querschnitte aufrechterhalten, aber doch ausgeprägte innere Reibwerte aufweisen. Diese inneren Reibwerte bewirken eine Abstützung der Körner untereinander, was als Hauptfaktor zur Ausgleichung der Geschwindigkeit der zwei ineinander laufenden Produktströme aus den Trichtern im Bereich des Ausgleichsstutzens genutzt wird.

Eine besonders interessante Anwendungsmöglichkeit der Erfindung bietet sich beim Austrag aus Abstehzellen, welche in Mühlenanlagen direkt vor der Vermahlung eingesetzt werden. In den Abstehzellen wird frisch befeuchteter Weizen oder andere Getreideprodukte für mehrere Stunden gelagert. Hier kann es von Vorteil sein, wenn zumindest der äussere Trichter durch einen Vibrator kurzzeitig vibriert wird, um den Start zur Produktaustragung zu geben. Einmal in Bewegung rieselt das Produkt von selbst nach.

Die Erfindung erlaubt eine Vielzahl vorteilhafter weiterer Ausbildungsgedanken. Bevorzugt weist der obere Bereich des Ausgleichsstutzens eine zylindrische Form und der untere Bereich eine verjüngte Form auf, vorzugsweise derart, dass der Ausgleichsstutzen im Bereich der zylindrischen Form wenigstens eine zu seiner freien Auslauföffnung doppelt große Querschnittsfläche aufweist.

Mindestens in den Fällen, in denen hohe Reinheitsforderungen gestellt werden, was bei Nahrungsmitteln immer zutrifft, wird bevorzugt, daß der innere und der äussere Trichter nach oben frei bzw. offen sind, und dass ferner der innere Trichter am oberen Ende einen nach oben offenen zylindrischen Einzugsring aufweist. Die selbstreinigende Wirkung wird unterstützt, wenn gleichzeitig der äussere und der innere Trichter eine runde bzw. kegelige Form aufweisen, welche einen Winkel von $60^{\circ}$ - $70^{\circ}$ einschliessen. Einen ruhigen und stabilen Produktfluss und auch eine gute Arbeitsweise im Bereich des Ausgleichsstutzens erhält man, wenn der innere Trichter im Bereich seines unteren Auslaufes ein zylindrisches Ende mit einer kleineren Querschnittsfläche als 50% der Querschnittsfläche des Ausgleichsstutzens beträgt und in denselben hineinragt.

Die Grösse der Teilmengen soll durch die geometrische Form des inneren sowie des äusseren Trichters bestimmt werden. Die primäre Funktion des Ausgleichsstutzens ist es zu verhindern, dass unterhalb der zwei Trichter eine Verdrängungswirkung entsteht. Der innere Produktstrom neigt zum Durchschiessen, was besonders bei den zwei erwähnten Lösungen des Standes der Technik (DL-A-142 437, DE-U-1 944 281) eintreten kann. Um die zwei genannten Lösungen in diesem Punkt zu verbessern, müsste die Auslauföffnung des inneren Trichters verkleinert werden. Dies hätte aber zur Folge, dass frisch befeuchtetes Produkt beim inneren Trichter überhaupt nicht mehr ab- bzw. auslaufen würde, da dann eine umgekehrte Verdrängungswirkung von dem äusseren Produktstrom auf den inneren Produktstrom wirksam würde.

Die Erfindung vermag die Verdrängungswirkung sehr wirksam zu beseitigen durch den Einsatz des Ausgleichsstutzens. Um die nötige Betriebssicherheit für verschiedene Produkte zu erhalten, muss eine wirksame Höhe des Ausgleichsstutzens gegeben sein. Es hat sich bewährt, wenn die Höhe des Ausgleichsstutzens wenigstens 1/3 der Höhe des äusseren Trichters beträgt.

Bevorzugt werden ferner die Elemente geometrisch so aufeinander abgestimmt, dass der kleinste Ablaufquerschnitt des inneren Trichters bzw. das kleinste Maß zwischen dem inneren Trichter und dem äusseren Trichter nicht wesentlich kleiner ist als der halbe Durchmesser der Auslauföffnung des Ausgleichsstutzens.

Eine angenehme Hilfe kann dem die Anlage betreuenden Personal gegeben werden, wenn der Ausgleichsstutzen ein Schauglas aufweist. Dies erlaubt, wenn auch etwas eingeschränkt, das Geschehen an der neuralgischen Stelle mit dem Auge überwachen zu können.

Eine weitere, besonders vorteilhafte Ausführungsform erhält man, durch den Einbau eines Segments in den Bereich des inneren Trichters. Dies ermöglicht eine Sichtkontrolle über den inneren und äusseren Produktstrom. Es genügt, wenn das Segment bis etwa in die Mittelachse des inneren Trichters hineinragt. Als optimale Form hat sich ein ca. 30° - 90° Segment bewährt. Das Segment ist im Bereich der Kreisringfläche des äusseren Produktstromes oben durch ein sattelartiges Dach abgedeckt. Das Dach ragt in den äusseren Ringquerschnitt hinauf. Der Raum unterhalb des Daches ist allseitig abgeschlossen, so dass hier keine toten Räume entstehen. In Weiterführung dieses Gedankens kann das Segment mit einer Probeentnahmeöffnung kombiniert werden. Die Probeentnahmeöffnung kann ferner auch als Stocheröffnung benutzt werden, derart, dass über die Oeffnung ein biegsamer Stab in den Bereich des inneren Trichters eingeführt werden kann, um allfällige Stockungen von Hand sofort beheben zu können.

Die Funktionsweise ist sehr einfach. Der äussere Produktstrom fliesst ohne nennenswerte Behinderung über das Segment im restlichen freien Bereich von $270^o$ bis $330^o$ des Umfanges nach unten. Entsprechend ist die Produktbewegung am Schauglas sichtbar. Ein kleiner Teil des inneren Produktstromes rieselt in das Segment hinein und bildet dort nach den Gesetzen der Schüttgutmechanik einen freien Schüttkegel bis zu der Wand des Schauglases. Da das Segment unten offen ist, findet ein ständiges Durch- und Nachströmen statt. Dieses Nachströmen bzw. die entsprechende Bewegung ist an dem Schauglas von aussen sichtbar. Damit bekommt man gleichzeitig eine schöne Sichtkontrolle sowohl über den inneren als auch über den äusseren Produktstrom. Stockungen im Bereich des äusseren Produktstromes können z.B. mit einem Gummihammer, diejenigen des inneren Produktstromes mit einem elastischen Stahlstab behoben werden. Selbstverständlich handelt es sich bei dieser vorteilhaften Ausführungsform um einen vollautomatischen Betrieb. Die Praxis zeigt immer wieder, dass von einem bestimmten Kundenkreis, besonders in Entwicklungsländern, zweckmässige und einfach bedienbare Anlagen verlangt werden. In dieser Beziehung gibt die neue Erfindung besonders vorteilhafte Möglichkeiten. Das technische Anlagepersonal schätzt solche Hilfe sehr.

Bei besonders schwierigen Fällen könnte das Segment auch mit der Abstützkonstruktion des inneren Trichters kombiniert werden. Dem ersten Gedanken wird aus eher praktischen Erwägungen (Verwendung von Standardelementen usw.) den Vorzug gegeben.

Bei einem weiteren Ausgestaltungsgedanken der Erfindung werden der innere Trichter und der äussere Trichter aus demselben Material, vorzugsweise aus Blech gefertigt und derart ausgebildet, dass der innere Trichter an dem äusseren Trichter abgestützt ist und der Auslauftrichter als Anbaueinheit an die Silokonstruktion schraubbar ist. Damit dürfte es wohl erstmals ermöglicht worden sein, für die eingangs geschilderte Aufgabenstellung eine einfache, funktionsfähige und in jeder Beziehung wirtschaftliche Baueinheit zu gebrauchen. Wertvoll für den Bedienungsfachmann ist die volle Kontrollmöglichkeit des Geschehens im Innern des Silos.

Die Erfindung betrifft ferner auch die Verwendung des Auslauftrichters an Silozellen für die Lagerung von Nahrungs- oder Futtermittelkomponente, insbesondere auch von solchen Produkten die leichte Ausflussprobleme ergeben, wie frisch befeuchteter Weizen in Abstehkästen.

Die Erfindung betrifft ferner ein Verfahren zur entmischungsfreien Austragung von Lagerprodukten aus Silozellen. Das neue Verfahren ist dadurch gekennzeichnet, dass der Produktstrom im Bereich des Siloauslasses in einen äusseren und in einen inneren Strom aufgeteilt und die Geschwindigkeit der beiden Teilströme im wesentlichen stetig erhöht werden, so dass die beiden koaxialen Teilströme anschliessend ohne wesentliche Richtungsänderung über einen vertikalen Bereich unter Rückstau zusammengeführt, in ihrer Geschwindigkeit ausgeglichen und anschliessend über einen reduzierten Querschnitt frei abgelassen werden.

Das neue Verfahren kann noch sehr zweckmässig weiter ausgebildet werden, indem die Teilung des Produktstromes in einem Querschnittsbereich der trichterförmigen Auslasszone durchgeführt wird, indem garantiert noch freier Massenfluss herrscht. Bevorzugt wird die Teilung nicht unterhalb eines Durchmessers von 0.5m und nicht über einem Durchmesser von 2 m durchgeführt.

Diese Massnahmen ermöglichen Standard-Auslauftrichter herzustellen, die z.B. von 0.5m, 1.0m, 1.5m und 2 m Durchmesser aufweisen. Nur bei kleinen Silozellen unterhalb 1-2 m Durchmesser würde die Teilung des Produktstromes im vollen Siloquerschnitt erfolgen. Bei den grösseren Zellen würde der obere Teil der trichterförmigen Auslasszone in Beton oder dem Material ausgeführt, aus dem der ganze Silo gebaut ist.

Bei einem ganz besonders vorteilhaften Ausgestaltungsgedanken des erfindungsgemässen Verfahrens wird sowohl die Bewegung des inneren wie des äusseren Produktstromes sichtbar gemacht. Dabei wird bevorzugt ein Teil des inneren Produktstromes im Sinne einer Musterentnahme nach aussen am Schauglas vorbeigeführt, unmittelbar neben dem vom äusseren Produktstrom umströmten Teil des Schauglases. Das Verhältnis der Bewegung der zwei Produktströme kann auf diese Weise direkt mit dem Auge überwacht werden.

Kurze Beschreibung der Zeichnungen

Die Erfindung wird nun anhand von zwei Ausführungsbeispielen noch näher erläutert. Es zeigen

Figur 1 eine erfindungsgemäße Lösung im Schnitt, wie sie für Weizensiloanlagen vorgesehen ist;

Figur 2 ein Beispiel für einen kleineren Behälter mit Dosierschnecke, insbesondere für Abstehzellen;

Figur 3  eine weitere sehr vorteilhafte Ausführung für eine Sichtkontrolle für den inneren wie für den äußeren Produktstrom im Bereich des Ausgleichsstutzens, für die in Figur 1 oder Figur 2 angegebenen Ausführungsform;

Figur 4  einen Schnitt längs X-X aus Figur 3 (Segment für die innere Sichtkontrolle), und

Figur 5  einen Teilschnitt längs Y-Y in Figur 3 (Bereich des Segmentes).

Ausführliche Beschreibung der Zeichnungen

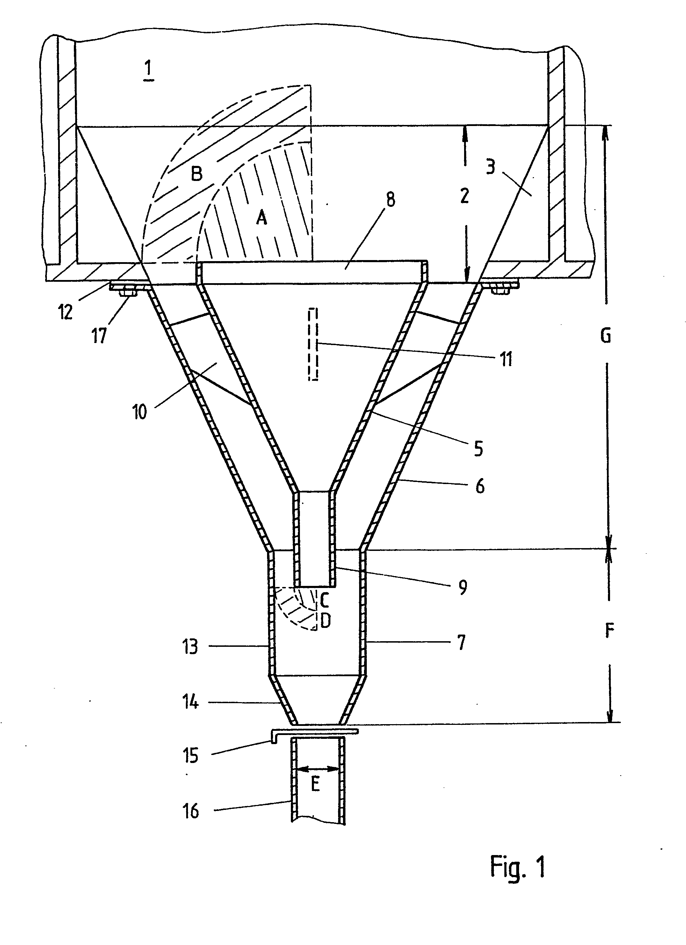

Der Silo ist, wie in Figur 1 dargestellt, in Beton hergestellt. Die Silozelle kann eine Höhe von bis zu 50 m und mehr haben. Das obere Drittel einer konischen Auslaufpartie 2 ist ebenfalls in Beton gefertigt, wobei meistens eine sogenannte Schiftung 3 aus Magerbeton hergestellt wird. Ein Auslauftrichter besteht im wesentlichen aus drei Elementen, einem inneren Trichter 5, einem äußeren Trichter 6 sowie einen Ausgleichsstutzen 7. Der innere Trichter 5 weist einen oberen zylindrischen Einzugsring 8 auf, der einerseits dem inneren Trichter 5 eine erhöhte Stabilität und andererseits einen besseren definierten Einzug für das Produkt gibt. Die für den Produktabzug maßgebliche Menge kann aufgrund der Kreisfläche A innerhalb des Einzugsringes 8 sowie der entsprechenden Kreisringfläche B zwischen dem Einzugsring 8 sowie dem äußeren Trichter 6 errechnet werden, wobei A und B andeutungsweise in Figur 1 eingezeichnet sind. Der innere Trichter 5 weist ferner ein zylindrisches Ende 9 auf, welches einige Zentimeter in den Ausgleichsstutzen 7 hineinragt. Bei Neuanlagen wird der innere Trichter 5 vorzugsweise direkt über Stützbleche 10 mit dem äußeren Trichter 6 verschweißt. Die in Figur 1 dargestellten Verhältnisse gelten eher für einen kleineren Silo. Bei größeren Siloquerabmessungen würde der Betontrichter entsprechend größer gebaut. Mit Beton lassen sich die großen Kräfte im Bereich der konischen Auslaufpartie 2 besser abfangen.

Für grosse Siloabmessungen kann es notwendig sein, im inneren Trichter 5 zusätzlich ein Verstärkungskreuz 11 einzuschweissen, wie strichliert eingezeichnet ist. Der äussere Trichter 6 wird über ein Flansch 12 sowie Schrauben 17 an der Silodecke festgeschraubt. Der Ausgleichsstutzen 7 hat im oberen Teil eine zylindrische Form 13, im unteren Teil eine konische verjüngte Form 14. Die verjüngte Form 14 verursacht einen Rückstau auf die darüberliegende Zone der zylindrischen Form 13, wodurch der Ausgleich der Geschwindigkeiten des abströmenden Gutes aus den beiden Trichtern 5 und 6 erzwungen wird. Unterhalb des Ausgleichsstutzens 7 ist ein Schieber 15 angebracht der für Servicearbeiten der nachfolgenden Leitungsstücke 16 usw. gebraucht wird.

Beim Einsatz des Auslauftrichters für unbekannte Produkte kann es vorteilhaft sein, den Ausgleichsstutzen 7 in zwei Stücken herzustellen, d.h. die obere zylindrische Form 13 als ein Stück sowie die untere verjüngte Form 14 als ein Stück. Auf diese Weise kann eine Ausgleichszone "F" bezüglich einer Trichterzone "G" noch verändert werden. Wenn ein Produkt eine Tendenz zum Durchschiessen hat, muss die Höhe "F" vergrössert und event. der Auslassdurchmesser "E" verkleinert werden.

Im Regelfall sollen die Querschnittsverhältnisse im Bereich des äusseren Trichters 6 sowie des inneren Trichters 5 so gewählt werden, dass in beiden Bereichen ähnliche Geschwindigkeitsverhältnisse herrschen, was durch entsprechende Auslegung der geometrischen Abmessungen bei A, B resp. C und D geschieht.

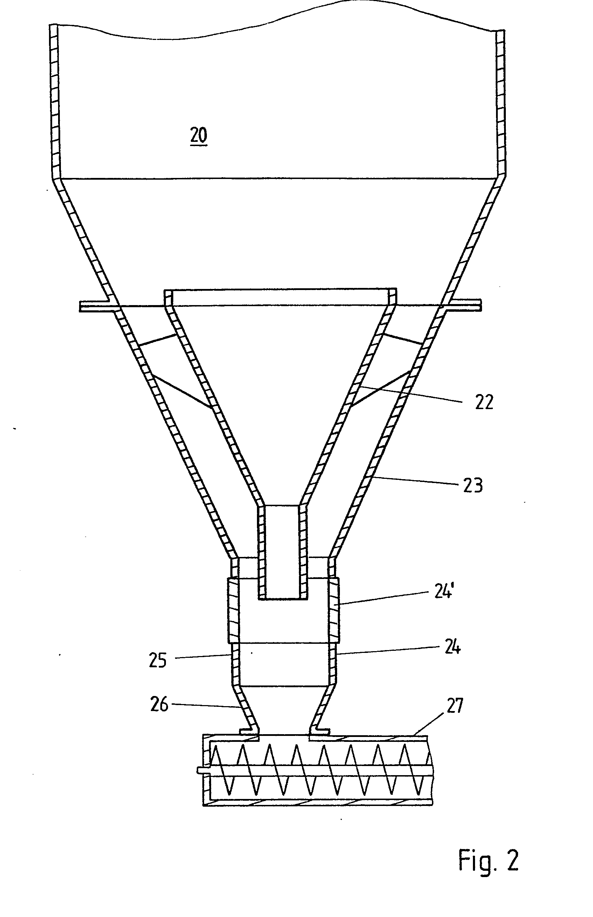

In Fig. 2 ist eine zweite Ausführungsform der Erfindung für kleinere Silozellen bzw. Behälter dargestellt.

Einem Behälter 20 ist hier ein Auslauftrichter angebaut, welcher wiederum aus einem inneren Trichter 22 einem äusseren Trichter 23 sowie einem Ausgleichsstutzen 24 besteht. Der Ausgleichsstutzen 24 besteht aus einer zylindrischen Form 25
und einer konisch verjüngten Form 26 und mündet unten in eine
Dosierschnecke 27, die einen zusätzlichen Rückstau bewirkt.

Für den erfindungsgemässen Auslauftrichter werden gesamthaft
runde Formen bevorzugt. Jedoch kann, um etwas an Höhe zu
sparen, in besonderen Fällen z.B. der äussere Trichter an eine
viereckige Form angepasst werden.
Bei kleineren Behältern wird bevorzugt der ganze Ausgleichsstutzen 24 aus Glas oder durchsichtigem Kunststoff hergestellt, damit ein guter Einblick und eine Kontrollmöglichkeit auch während des Betriebes bestehen.

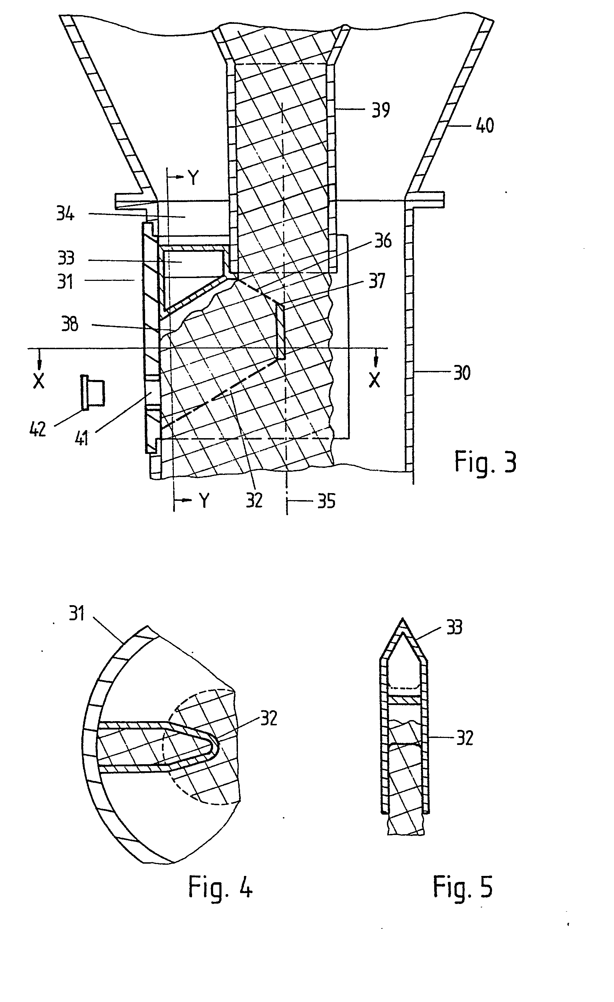

Die Figuren 3, 4 und 5 zeigen eine besonders zweckmässige
Ausführungsform der Erfindung. Hier sind Sichtkontrollmittel
für den inneren und den äusseren Produktstrom als Bausatzgedanke kombiniert.

Ein Ausgleichsstutzen 30 ist beispielsweise aus Stahl gefertigt
und weist ein grosses Schauglas 31 auf, das mehr als den halben
Umfang des Ausgleichsstutzens 30 für eine Sichtkontrolle frei
lässt. An dem Ausgleichsstutzen 30 bzw. an dem Schauglas ist
ein Segment 32 befestigt. Um eine geringstmögliche Störung
für den äusseren Produktstrom zu verursachen, ist das Segment
32 nach oben durch ein geschlossenes Dach 33 in einen Kreisringquerschnitt 34 verlängert.

Das Segment bzw. Kontrollsegment ragt nach innen bis zur Mittelachse 35 und ist
im inneren Arbeitsbereich durch eine von aussen nach innen
schräg nach unten verlaufende Kante 36 begrenzt. In demselben
Arbeitsbereich (Kante 36) ist der obere Rand als Schneide 37
ausgebildet. Auf diese Weise wird das durch das Segment abgezweigte Kontrollgut nahezu widerstandslos vom fallenden Produktstrom abgeschnitten und nach aussen abgelenkt. Entsprechend den
Fliesseigenschaften des rieselnden Produktes (z.B. feuchtes
Getreide, das aus einer Abstehzelle heraustritt) bildet sich
im Segment 32 unterhalb des Daches 33 ein freier Schüttkegel.

(Linie 38), welcher bis zu der inneren Fläche des Schauglases 31 reicht, so dass das Vorhanden- oder Nichtvorhandensein des Produktes bzw. das Stillstehen oder Fliessen des Produktes jederzeit von Auge feststellbar ist. Wenn ferner die Strömungsquerschnitte der Eintrittsfläche des Segmentes (Bereich Kante 36) sowie der Fliessquerschnitt des Segmentes 32 im Horizontalschnitt optimal gewählt werden, lässt sich auf diese Weise ganz besonders elegant nicht nur eine bloße Sichtkontrolle als solche, sondern auch das Verhältnis der Fliessgeschwindigkeit des äusseren wie des inneren Produktstromes feststellen. Falls aus irgendwelchen Gründen im Laufe der Zeit Abweichungen z.B. der Fliessbedingungen des inneren Trichters 39 zu dem äusseren Trichter 40 auftreten, zeigt sich dies durch direkten Vergleich der beiden Fliessbilder im Schauglas 31. Der Fehler kann durch Wahl eines neuen Farbanstriches, Neupolieren usw. sofort behoben werden.

Das Segment lässt sich auch kombinieren mit einer Musterentnahmeöffnung 41, welche durch einen Deckel 42 verschliessbar ist. Ebenfalls durch die Musterentnahmeöffnung 41 können mit einem elastischen Stab allfällige Stockungen des inneren Produktstromes behoben werden.

Patentansprüche

1. Auslauftrichter für Silozellen, mit zwei ineinander gesetzten Trichtern (5, 6; 22, 23) zur entmischungsfreien Austragung von Weizen und anderen Nahrungs- oder Futtermitteln,
dadurch g e k e n n z e i c h n e t , daß der äußere Trichter (6, 23) sowie der innere Trichter (5, 22) zwei im wesentlichen sich stetig verengende Ablaufquerschnitte bilden, die in einen gemeinsamen Ausgleichsstutzen (7, 24) geführt sind.

2. Auslauftrichter nach Anspruch 1, dadurch gekennzeichnet, daß der obere Bereich des Ausgleichsstutzens (7, 24) eine zylindrische Form (13, 25) und der untere Bereich eine verjüngte Form (14, 26) aufweist.

3. Auslauftrichter nach Anspruch 2, dadurch gekennzeichnet, daß der Ausgleichsstutzen (7, 24) im Bereich der zylindrischen Form (13, 25) wenigstens eine im Verhältnis zu seiner Auslauföffnung doppelte Querschnittsfläche aufweist.

4.      Auslauftrichter nach Anspruch 1, 2 oder 3,
dadurch gekennzeichnet, dass der innere Trichter (5, 22)
und der äussere Trichter (6, 23) nach oben frei bzw. offen
sind.

5.      Auslauftrichter nach einem der Ansprüche 1 bis 4,
dadurch gekennzeichnet, dass der innere Trichter (5, 22)
am oberen Ende einen nach oben offenen zylindrischen Einzugsring (8) aufweist.

6.      Auslauftrichter nach einem der Ansprüche 1 bis 5,
dadurch gekennzeichnet, dass der äussere Trichter (6, 23)
und der innere Trichter (5, 22) eine runde bzw. kegelige
Form aufweisen, welche einen Winkel von 60$^{\circ}$ bis 70$^{\circ}$ einschliessen.

7.      Auslauftrichter nach Anspruch 1, dadurch gekennzeichnet, dass der innere Trichter (5, 22) im Bereich des
unteren Auslaufes ein zylindrisches Ende (9) mit einer
kleineren Querschnittsfläche als 50% der Querschnittsfläche
des Ausgleichsstutzens (7, 24) aufweist.

8.      Auslauftrichter nach Anspruch 7, dadurch gekennzeichnet, dass das zylindrische Ende (9) in den Auslaufstutzen
(7, 24) hineinragt.

9.      Auslauftrichter nach Anspruch 1, dadurch gekennzeichnet, dass die Höhe des Ausgleichsstutzens (7, 24) wenigstens
1/3 der Höhe des äusseren Trichters (6, 23) beträgt.

10.     Auslauftrichter nach Anspruch 1, dadurch gekennzeichnet, dass der kleinste Ablaufquerschnitt "C" des inneren
Trichters (5, 22) bzw. das kleinste Mass zwischen dem
inneren Trichter (5, 22) und dem äusseren Trichter (6, 23)
nicht wesentlich kleiner ist als der halbe Durchmesser der Auslauföffnung des Ausgleichsstutzens (7, bzw. 24).

11. Auslauftrichter nach einem der Ansprüche 1 bis 10, dadurch gekennzeichnet, dass der innere Trichter (5, 22) und der äussere Trichter (6, 23) aus demselben Material vorzugsweise aus Blech,gefertigt sind.

12. Auslauftrichter nach einem der Ansprüche 1 bis 11, dadurch gekennzeichnet, dass der Ausgleichsstutzen (7, 24) ein Schauglas (24') aufweist.

13. Auslauftrichter nach Anspruch 12, dadurch gkennzeichnet, dass der Ausgleichsstutzen (7, 24; 30) im Bereich des Schauglases (24', 31) ein Segment (32) zur Sichtbarmachung des inneren Produktstromes aufweist.

14. Auslauftrichter nach Anspruch 13, dadurch gekennzeichnet, dass Ausgleichsstutzen (7, 24, 30), Schauglas (24', 31) und Segment (32) eine Baueinheit bilden.

15. Ausgleichsstutzen nach einem der Ansprüche 12, 13 oder 14, dadurch gekennzeichnet, dass im Bereich des Schauglases (24', 31) wenigstens eine Musterentnahmeöffnung (41) vorgesehen ist.

16. Ausgleichsstutzen nach Anspruch 15, dadurch gekennzeichnet, dass wenigstens eine Musterentnahmeöffnung (41) im Bereich des Segmentes (32) vorgesehen ist.

17. Auslauftrichter nach einem der Ansprüch 1 bis 16, dadurch gekennzeichnet, dass der innere Trichter (5, 22) an dem äusseren Trichter (6, 23) abgestützt und als Anbaueinheit an eine Silokonstruktion (1, 20) schraubbar ist.

18.     Verwendung des Auslauftrichters nach einem der Ansprüche 1 bis 12 an Silozellen für die Lagerung von Nahrungs- oder Futtermittelkomponenten, insbesondere auch von solchen Produkten, die leichte Ausflussprobleme ergeben, wie frisch befeuchteter Weizen in Abstehkästen.

19.     Verfahren zur entmischungsfreien Austragung von Lagerprodukten aus Silozellen, dadurch g e k e n n - z e i c h n e t, dass der Produktstrom im Bereich des Siloauslasses in einen äusseren und in einen inneren Strom aufgeteilt und die Geschwindigkeit der beiden Teilströme im wesentlichen stetig erhöht wird, und dass die beiden koaxialen Teilströme anschliessend ohne wesentliche Richtungsänderung über einen vertikalen Bereich unter Rückstau zusammen geführt, in ihrer Geschwindigkeit ausgeglichen werden und anschliessend über einen reduzierten Querschnitt frei abgelassen werden.

20.     Verfahren nach Anspruch 19, dadurch gekennzeichnet, dass die Teilung des Produktstromes in einem Bereich stattfindet, in dem mit Sicherheit noch freier Massenfluss herrscht.

21.     Verfahren nach Anspruch 19 oder 20, dadurch gezeichnet, dass die Bewegung sowohl des inneren wie des äusseren Produktstromes durch ein Schauglas sichtbar gemacht wird.

22.     Verfahren nach Anspruch 21, dadurch gekennzeichnet, daß ein Teil des inneren Produktstromes im Sinne einer Musterentnahme nach außen an einem Schauglas vorbeigeführt wird, vorzugsweise unmittelbar neben dem vom äußeren Produktstrom umströmten Teil eines Schauglases, zum Zwecke der Kontrolle bzw. eines Vergleiches beider Ströme.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 030 633 (G. FISHER)<br><br>* Spalte 5, Zeile 60 - Spalte 6, Zeile 3; ·Figur 5 *<br><br>--- | 1,2,4,<br>5,8,19<br>,20 | B 05 D 88/28<br>B 65 G 69/10 |
| X | US-A-1 605 070 (G.A. ROCKBURG)<br><br>* Seite 1, Zeilen 63-79; Figuren *<br><br>--- | 1,4,6,<br>11,19,<br>20 | |
| A | DE-A-1 920 594 (JAEGER)<br><br>* Ansprüche 1-3; Figuren *<br><br>--- | 1-3,6,<br>8,11,<br>19,20 | |
| A,P | US-A-4 282 988 (HULBER JR.)<br>* Zusammenfassung; Figuren *<br><br>--- | 1 | RECHERCHIERTE SACHGEBIETE (Int. Cl. 3) |
| A | US-A-2 843 274 (G.M. WILLIAMS)<br>* Anspruch 1; Figuren *<br><br>--- | 1 | B 65 G<br>B 65 D<br>B 01 F |
| A | DE-C- 120 168 (WEISMÜLLER)<br>* Anspruch 1; Figuren *<br><br>----- | 1,2,19 | |

Der vorliegende Recherchenbericht wurde für alle Patentansprüche erstellt.

| Recherchenort | Abschlußdatum der Recherche | Prüfer |
|---|---|---|
| DEN HAAG | 29-07-1982 | VAN ROLLEGHEM F.M. |